# EUROPÄISCHE PATENTSCHRIFT

(11) **EP 3 878 078 B1**
(45) Veröffentlichungstag und Bekanntmachung des Hinweises auf die Patenterteilung: **16.07.2025**
(21) Anmeldenummer: 19794517.3
(22) Anmeldetag: 24.10.2019
(51) Int. Cl.: H02K 3/34

(54) **ELEKTRISCHE MASCHINE, KRAFTFAHRZEUG UND VERFAHREN ZUR HERSTELLUNG EINER WICKLUNG FÜR EINE ELEKTRISCHE MASCHINE**
ELECTRIC MOTOR, MOTOR VEHICLE, AND METHOD FOR PRODUCING A WINDING FOR AN ELECTRIC MOTOR
MACHINE ÉLECTRIQUE, VÉHICULE À MOTEUR ET PROCÉDÉ POUR RÉALISER UN BOBINAGE POUR UNE MACHINE ELECTRIQUE

(30) Priorität: 07.11.2018 DE 102018218963
(43) Veröffentlichungstag der Anmeldung: 15.09.2021
(73) Patentinhaber: Audi AG, 85045 Ingolstadt (DE)
(72) Erfinder: WEBER, Korbinian, 85049 Ingolstadt (DE)
(86) Internationale Anmeldenummer: PCT/EP2019/078998
(87) Internationale Veröffentlichungsnummer: WO 2020/094406

(56) Entgegenhaltungen:
- EP-A2- 1 381 140
- WO-A1-2012/114181
- JP-A- 2015 061 347
- JP-B2- 5 984 592
- KR-A- 20180 057 949
- US-A1- 2008 231 136

## Beschreibung

Die Erfindung betrifft eine elektrische Maschine mit einem Wicklungsträger mit mehreren Nuten, der wenigstens eine Wicklung trägt, wobei die Wicklung durch einen Leiter gebildet ist, der mehrere Nutabschnitte aufweist, die sich jeweils innerhalb einer der Nuten des Wicklungsträgers erstrecken und die durch Verbindungsabschnitte des Leiters, die außerhalb der Nuten liegen, leitend verbunden sind, wobei die Wicklung mehrere miteinander leitend verbundene Leiterklammern umfasst, die jeweils zwei Nutabschnitte und einen die Nutabschnitte verbindenden Kopplungsabschnitt ausbilden, wobei die einzelnen Leiterklammern gegenüber dem Radius des Wicklungsträgers derart schräg stehen, dass ein erstes freies Ende der jeweiligen Leiterklammer in einer tieferen Wicklungsebene liegt, als ein zweites freies Ende der Leiterklammer. Daneben betrifft die Erfindung ein Kraftfahrzeug und ein Verfahren zur Herstellung einer Wicklung für eine elektrische Maschine.

Insbesondere für Antriebsmaschinen in Kraftfahrzeugen wird inzwischen häufig eine sogenannte Hairpin-Bauweise genutzt. Bei dieser Fertigungstechnik wird ein Profildraht, meist ein Rechteckdraht, zunächst in eine U-Form, also in die Form einer Haarnadel bzw. eines "Hairpin", gebogen. Die Schenkel dieses Hairpins werden anschließend kreisförmig angeordnet und in die Nuten eines Statorblechpakets eingesetzt. Die freien Enden der jeweiligen Hairpins werden im nächsten Schritt konzentrisch zur Statorachse um einen definierten Winkel verdreht. Hierbei werden alle Enden, die auf einem jeweiligen Durchmesser, das heißt auf einer bestimmten Lage in den Nuten, liegen, abwechselnd in und gegen den Uhrzeigersinn verdreht. Dies wird auch als "Twisten" bezeichnet.

Die nebeneinander liegenden Enden werden miteinander verschweißt. Je nach Wickelschema werden Verschaltbrücken auf den Winkelkopf aufgesetzt und mit entsprechenden Enden von Hairpins verschweißt, um die Hairpins zu einer Gesamtwicklung zu verschalten. Gegebenenfalls werden die Pinenden anschließend isoliert und der gesamte Stator imprägniert. Diese Technik ermöglicht eine hohe Automatisierung und einen hohen Kupferfüllfaktor in den Statornuten, also ein hohes Verhältnis zwischen Kupferfläche und Nutfläche. Daher wird eine solche Bauweise insbesondere für Elektromotoren im Automobilbereich gerne genutzt.

Bei einer solchen Herstellung eines Stators kann es problematisch sein, dass relativ viele Kreuzungsstellen zwischen Leiterabschnitten verschiedener elektrischer Phasen im Wickelkopf auftreten. Dies führt bei Motoren mit hohen Zwischenkreisspannungen zu einer starken Belastung der elektrischen Isolation. Es kann daher erforderlich sein, relativ dicke Isolationsschichten zu nutzen, was jedoch zu einer Reduzierung des Kupferfüllfaktors führt. Alternativ oder ergänzend kann versucht werden, durch spezielle Isolationsmaterialien die Hochspannungsfestigkeit der Isolation weiter zu verbessern. Es sind eine Vielzahl hochspannungsfester Isolationsmaterialien bekannt. Rein beispielhaft wird diesbezüglich auf die Druckschrift DE 37 18 449 A1 verwiesen. Trotz der möglichen Verbesserungen der Isolation durch Wahl eines entsprechenden Isolationsmaterials resultiert jedoch weiterhin ein relativ hoher Verbrauch von Nutfläche durch die Isolationsschicht.

Aus der Druckschrift KR 2018 0057949 A ist ein Stator eines Antriebsmotors mit einer Hairpin-Wicklung bekannt. Ein Leiter der in einem Leiterstapel der jeweiligen Nut am weitesten innen liegt, kann einen geringeren Leiterquerschnitt bzw. eine isolierende Beschichtung mit einer größeren Dicke als die anderen Leiter in der Nut aufweisen.

Die Druckschrift EP 1 381 140 A2 betrifft Hairpin-Wicklungen für elektrische Maschinen, bei denen die jeweilige Wicklung durch in Serie verbundene Leiterklammern gebildet ist.

Der Erfindung liegt somit die Aufgabe zugrunde, eine elektrische Maschine anzugeben, die die erforderliche Isolation der Leiter der elektrischen Maschine gegeneinander mit geringerem Flächenverbrauch in Nuten eines Wicklungsträgers, beispielsweise eines Statorblechpakets, erreichen kann.

Die Aufgabe wird durch die unabhängigen Ansprüche gelöst. Erfindungsgemäße ist bei einer elektrischen Maschine der eingangs genannten Art vorgesehen, dass der Leiter zumindest in den Nutabschnitten eine auf dem Leiter aufgebrachte Isolationsschicht aufweist, wobei die Isolationsschicht für wenigstens zwei der Nutabschnitte eine voneinander unterschiedliche Schichtdicke aufweist, wobei beide Nutabschnitte einer ersten der Leiterklammern eine Isolationsschicht mit einer ersten Schichtdicke aufweisen und wobei beide Nutabschnitte einer zweiten der Leiterklammern eine Isolationsschicht mit einer von der ersten Schichtdicke unterschiedlichen zweiten Schichtdicke aufweisen.

Im Rahmen der Erfindung wurde erkannt, dass hohe Spannungen zwischen sich kreuzenden Leitern verschiedener Phasen in der Regel nur für relativ wenige Windungen bzw. Nutdurchführungen der jeweiligen Wicklung auftreten. Speziell in den ersten Windungen nach dem Phaseneingang ist mit Spannungsspitzen bzw. Spannungsüberhöhungen zu rechnen. Diese Effekte treten bei vielen Wicklungs- bzw. Verschaltungsschemata für elektrische Maschinen auf. Durch die Nutzung verschiedener Schichtdicken für die Isolationsschichten verschiedener Nutabschnitte kann erreicht werden, dass besonders große Schichtdicken nur in Bereichen genutzt werden, in denen besonders hohe Spannungen auftreten. Hierdurch kann insgesamt der Kupferfüllfaktor der Nuten erhöht werden. Es wurde zudem festgestellt, dass, wie später noch genauer erläutert werden wird, eine Nutzung von unterschiedlichen Schichtdicken für die Isolationsschichten bei einem Aufbau der Wicklung in Hairpin-Bauweise mit geringem technischen Aufwand implementiert werden kann.

Die Schichtdicke der Isolationsschicht weicht für die zwei Nutabschnitte um wenigstens 5 % oder wenigstens 10 % oder wenigstens 50 % voneinander ab. Insbesondere ist die Schichtdicke eines der Nutabschnitte wenigstens 2-mal oder wenigstens 3-mal so groß wie die Schichtdicke des anderen Nutabschnitts. Besonders bevorzugt weisen mehrere der Nutabschnitte eine größere Schichtdicke der Isolationsschicht auf als die verbleibenden Nutabschnitte.

Der Wicklungsträger kann insbesondere ein Statorkörper, beispielsweise ein Statorblechpaket, sein bzw. die Wicklung kann insbesondere eine Statorwicklung sein. Der Wicklungsträger trägt vorzugsweise mehrere Wicklungen, wobei insbesondere jede der Wicklungen Nutabschnitte mit unterschiedlich dicken Isolationsschichten umfasst.

Der Leiter ist insbesondere, wie später noch genauer erläutert werden wird, aus einzelnen Leiterabschnitten zusammengesetzt, die in der fertiggestellten Wicklung den zusammenhängenden Leiter bilden. Die einzelnen Leiterabschnitte können beispielsweise miteinander verschweißt oder anderweitig leitend verbunden sein.

Die Isolationsschicht erstreckt sich vorzugsweise über den jeweiligen Nutabschnitt hinaus und zumindest über einen Teil des Verbindungsabschnitts. Insbesondere erstreckt sich die Isolationsschicht zumindest bis in jenen Teil des Wicklungskopfes, in dem sich Leiter verschiedener Wicklungen bzw. verschiedener Phasen kreuzen.

Die Summe der Querschnittsflächen des Leiters und der Isolationsschicht in einem ersten der Nutabschnitte kann gleich der Summe der Querschnittsflächen des Leiters und der Isolationsschicht in einem zweiten der Nutabschnitte, in dem die Isolationsschicht eine andere Schichtdicke als in dem ersten Nutabschnitt aufweist, sein. Insbesondere kann diese Summe für alle Nutabschnitte der Wicklung gleich sein. Dies kann für den ersten und zweiten Nutabschnitt bzw. für alle Nutabschnitte dadurch erreicht werden, dass die Querschnittsfläche des Leiters in jenem Nutabschnitt oder in jenen Nutabschnitten, in dem oder den eine dickere Isolationsschicht genutzt wird, reduziert wird. Insbesondere kann die Isolationsschicht im Querschnitt den gleichen Außendurchmesser für den ersten und zweiten Nutabschnitt bzw. für alle Nutabschnitte aufweisen. Hierdurch kann die Handhabbarkeit des Leiters bzw. der zum Leiter verbundenen Leiterabschnitte im Rahmen der Herstellung der Wicklung verbessert werden, da für eine solche Handhabung ausschließlich die Außenabmessungen des isolierten Leiters und somit die Außenabmessungen der Isolationsschicht relevant sind. Beispielsweise kann der Leiter durch einen Rechteckdraht gebildet werden. In diesem Fall kann die Summe aus der Breite des Leiters und der doppelten Schichtdicke der Isolationsschicht bzw. aus der Dicke des Leiters und der doppelten Schichtdicke der Isolationsschicht für den ersten und zweiten Nutabschnitt, insbesondere für alle Nutabschnitte der Wicklungen, gleich sein.

Die Wicklung umfasst mehrere miteinander verbundene Leiterklammern, die jeweils zwei Nutabschnitte und einen die Nutabschnitte verbindenen Kopplungsabschnitt aufweisen, wobei beide Nutabschnitte einer ersten der Leiterklammern eine Isolationsschicht mit einer ersten Schichtdicke aufweisen und wobei beide Nutabschnitte einer zweiten der Leiterklammern eine Isolationsschicht mit einer von der ersten Schichtdicke unterschiedlichen zweiten Schichtdicke aufweisen. Die Leiterklammern können hierbei insbesondere die eingangs diskutierten Hairpins einer Steckspule sein. Die leitende Verbindung kann beispielsweise durch ein Verschweißen oder Verlöten der freien Enden der Leiterklammern realisiert werden.

Vorzugsweise hat jede der Leiterklammern eine Isolationsschicht mit im Wesentlichen konstanter Schichtdicke, die sich zumindest über die Nutabschnitte und den Kopplungsabschnitt erstreckt. Vorzugsweise kann sich die Isolationsschicht über die gesamte Länge der Leiterklammer bzw. über die gesamte Länge abgesehen von endseitigen Kontaktabschnitten erstrecken. Entsprechende Leiterklammern sind einfach herstellbar, indem ein Draht mit konstanter Isolationsdicke in die Form der Leiterklammer gebogen wird. Vorzugsweise werden mehrere erste und/oder mehrere zweite Leiterklammern genutzt, um die Wicklung zu bilden.

Der Kopplungsabschnitt der Leiterklammer kann einseitig den Verbindungsabschnitt für die beiden Nutabschnitte bilden. Ein Verbindungsabschnitt zur nächsten bzw. vorangehenden Leiterklammer der Wicklung kann durch die überstehenden freien Enden der Leiterklammer gebildet werden, die, wie in der Einleitung erläutert, verdreht und verschweißt oder anderweitig leitend verbunden werden können.

Die erste und die zweite Leiterklammer können die gleichen Außenabmessungen aufweisen. Insbesondere sind die erste und zweite Leiterklammer beide aus einem jeweiligen isolierten Draht gebogen, wobei die Isolierung die gleichen Außenabmessungen aufweist. Für jene Leiterklammer, für die die Isolationsschicht eine größere Schichtdicke aufweist, können die Abmessungen des Leiters entsprechend reduziert sein und umgekehrt. Dies ermöglicht es, dass die erste und die zweite Leiterklammer gemeinsam und auf gleiche Weise gehandhabt werden können, was insbesondere bei einem automatisierten Einbringen der Leiterklammern in den Wicklungsträger und/oder einer automatisierten Verbindung zu der Wicklung vorteilhaft sein kann.

Die Nutabschnitte können jeweils entweder eine erste Schichtdicke oder eine zweite Schichtdicke aufweisen. Anders ausgedrückt können genau zwei verschiedene Schichtdicken der Isolationsschichten für alle Nutabschnitte einer Wicklung, insbesondere für alle Nutabschnitte aller Wicklungen, die an dem Wicklungsträger angeordnet sind, genutzt werden. Dabei können produktionsbedingte Toleranzen bzw. produktionsbedingte Abweichungen von der ersten Schichtdicke und der zweiten Schichtdicke auftreten. Beispielsweise kann die tatsächliche Schichtdicke einer Isolationsschicht um bis zu 5 % oder um bis zu 10 % oder um bis zu 20 % des Unterschieds zwischen der ersten und der zweiten Schichtdicke von der ersten oder zweiten Schichtdicke abweichen.

Der Leiter der Wicklung kann sich von einem ersten zu einem zweiten Wicklungsanschluss erstrecken, wobei bei einer Abzählung der Nutabschnitte entlang dem Leiter ausgehend vom ersten und/oder vom zweiten Wicklungsanschluss die Isolationsschicht zumindest des ersten und/oder des zweiten und/oder des dritten Nutabschnitts eine Isolationsschicht aufweist, die eine größere Schichtdicke aufweist als die Isolationsschicht wenigstens eines entlang dem Leiter weiter von dem ersten und/oder zweiten Wicklungsanschluss entfernten Nutabschnitts. Insbesondere kann die Schichtdicke des ersten und/oder zweiten und/oder dritten Nutabschnitts größer sein als die Schichtdicke aller Isolationsschichten von Nutabschnitten, die sich entlang dem Leiter weiter von dem ersten und zweiten Wicklungsanschluss entfernt befinden. Wie bereits erwähnt, treten nahe an Wicklungsanschlüssen potentiell besonders hohe Spannungen zwischen Leitern verschiedener Wicklungen bzw. Phasen auf. Vorzugsweise wird daher in diesem Bereich eine besonders dicke Isolation gewählt. Beispielsweise können bei einer Abzählung der Nutabschnitte entlang dem Leiter zumindest die ersten drei oder zumindest die ersten fünf oder zumindest die ersten sieben Nutabschnitte eine dickere Isolation aufweisen als zumindest Teile der Nutabschnitte, die weiter von den Wicklungsanschlüssen entfernt sind. Beispielsweise können alle benachbart zu den Wicklungsanschlüssen liegenden Nutabschnitte eine erste Schichtdicke aufweisen und die weiter entfernten Nutabschnitte eine zweite Schichtdicke.

Die Isolationsschicht kann durch einen Kunststoffmantel des Leiters gebildet werden. Beispielsweise kann Polyetheretherketon (PEEK) als Material der Isolationsschicht genutzt werden. Die Isolation kann durch einen Kunststoff-Extrusionsprozess aufgebracht werden. Gegenüber einer üblichen Isolation eines Leiters durch eine Lackierung wird hierbei der Vorteil erreicht, dass die Schichtdicke der Isolationsschicht nahezu frei wählbar ist, während bei einer Lackisolation die Dicke nur im engen Rahmen variiert werden kann. Als Leiter kann beispielsweise ein Kupferleiter verwendet werden.

Neben der erfindungsgemäßen elektrischen Maschine betrifft die Erfindung ein Kraftfahrzeug, das eine erfindungsgemäße elektrische Maschine umfasst.

Zudem betrifft die Erfindung ein Verfahren zur Herstellung einer Wicklung für eine elektrische Maschine, das die folgenden Schritte umfasst:
- Bereitstellen eines Wicklungsträgers mit mehreren Nuten und mehrerer Leiterklammern, die jeweils aus einem klammerförmigen Leiterabschnitt gebildet sind und jeweils zwei Nutabschnitte und einen die Nutabschnitte verbindenden Kopplungsabschnitt ausbilden, wobei die Leiterabschnitte zumindest abschnittsweise, nämlich zumindest in den Nutabschnitten, eine auf dem Leiterabschnitt aufgebrachte Isolationsschicht aufweisen, wobei die Isolationsschichten wenigstens zweier Leiterklammern eine voneinander unterschiedliche Schichtdicke aufweisen, sodass beide Nutabschnitte einer ersten der Leiterklammern eine Isolationsschicht mit einer ersten Schichtdicke aufweisen und beide Nutabschnitte einer zweiten der Leiterklammern eine Isolationsschicht mit einer von der ersten Schichtdicke unterschiedliche zweite Schichtdicke aufweisen,
- Axiales Einschieben der Leiterklammern in den Wicklungsträger derart, dass die einzelnen Leiterklammern gegenüber dem Radius des Wicklungsträgers derart schräg stehen, dass ein erstes freies Ende der jeweiligen Leiterklammer in einer tieferen Wicklungsebene liegt, als ein zweites freies Ende der Leiterklammer, und dass die Nutabschnitte sich jeweils innerhalb einer der Nute des Wicklungsträgers erstrecken, und
- Verbinden von freien Enden einer jeweiligen Gruppe der Leiterklammern zur Verbindung der Leiterabschnitte dieser Leiterklammern zu einem Leiter einer Wicklung, womit die Nutabschnitte durch außerhalb der Nuten liegende Verbindungsabschnitte des Leiters leitend verbunden sind.

Das erfindungsgemäße Verfahren entspricht somit weitgehend einem üblichen Vorgehen, um beispielsweise einen Stator in Hairpin-Bauweise herzustellen. Abweichend vom üblichen Vorgehen werden jedoch Leiterklammern bzw. Hairpins verwendet, die voneinander unterschiedlich dicke Isolationsschichten aufweisen. Die Leiterklammern mit voneinander unterschiedlich dicken Isolationsschichten können, wie vorangehend erläutert, insbesondere die gleichen Außenabmessungen aufweisen, so dass abgesehen von der Zuführung unterschiedlicher Leiterklammern der gleiche Herstellungsprozess wie zur Herstellung von Wicklungen in einer üblichen Wicklung in Hairpin-Bauweise verwendet werden kann. Insbesondere können somit die gleichen Maschinen mit den gleichen Einstellungen genutzt werden.

Bei größeren Serienfertigungen ist es hierbei ohnehin bereits üblich, dass Leiterklammern bzw. Hairpins auf mehreren parallel arbeitenden Anlagen hergestellt, also insbesondere gebogen, werden. Es stellt daher keinen nennenswerten Zusatzaufwand dar, einen Teil der Biegeanlagen mit einem anders isolierten Draht gleicher Abmessung zu bestücken. Die nachfolgenden Prozessschritte bleiben unberührt. Das erfindungsgemäße Verfahren kann somit mit sehr geringem technischen Aufwand umgesetzt werden.

Das Verbinden der Leiterklammern kann, wie vorangehend erläutert, durch ein Verdrehen bzw. Twisten der freien Enden der Leiterklammern und eine anschließende Verbindung, beispielsweise durch Verschweißen, realisiert werden. Nach den erläuterten Schritten können, wie eingangs erläutert, zusätzlich Verschaltbrücken auf den resultierenden Wickelkopf aufgesetzt und mit den Enden der Leiterklammern leitend verbunden, beispielsweise verschweißt, werden, um die Leiterklammern zu einer Gesamtwicklung zu verschalten.

Im erfindungsgemäßen Verfahren bzw. in der erfindungsgemäßen elektrischen Maschine ist es möglich, dass der gesamte Leiter der Wicklung durch die vorangehend erläuterten Leiterklammern gebildet wird. Hierbei bildet jede der Leiterklammern zwei Nutdurchführungen. In einigen Fällen kann es jedoch gewünscht sein, einzelne Nutdurchführungen zu nutzen, beispielsweise um eine Kontaktierung auf einer axial gegenüberliegenden Seite des Wicklungsträgers zu ermöglichen oder um eine Wicklung mit einer ungeradzahligen Anzahl von Nutdurchführungen bereitzustellen. In diesem Fall können zusätzlich oder alternativ zu den Leiterklammern lineare Pins genutzt werden, die insbesondere ebenfalls axial in den Wicklungsträger eingeschoben werden können und anschließend miteinander und/oder mit den Leiterklammern verbunden werden können, um die Wicklung auszubilden. Es ist hierbei auch möglich, dass verschiedene dieser linearen Pins verschieden dicke Isolationsschichten aufweisen. Bevorzugt werden lineare Pins jedoch nur im Bereich der Wicklungsanschlüsse genutzt, womit sie vorzugsweise eine gleichdicke Isolationsschicht aufweisen, wie jene Leiterklammern, die die dickeren Isolationsschichten aufweisen.

Alternativ oder ergänzend zur Nutzung zusätzlich linearer Pins können einzelne Nutdurchführungen auch dadurch realisiert werden, dass nach dem Einbringen der Leiterklammern in den Wicklungsträger und insbesondere nach dem Verbinden der freien Enden wenigstens ein Kopplungsabschnitt wenigstens einer der Leiterklammern getrennt wird, um zwei Wicklungsanschlüsse bereitzustellen.

Weitere Vorteile und Einzelheiten der Erfindung ergeben sich aus den folgenden Ausführungsbeispielen sowie den zugehörigen Zeichnungen. Hierbei zeigen schematisch:
- Fig. 1 und 2: geschnittene Detailansichten eines Ausführungsbeispiels einer erfindungsgemäßen elektrischen Maschine, deren Wicklungen durch ein Ausführungsbeispiel des erfindungsgemäßen Verfahrens herstellbar sind,
- Fig. 3 und 4: Detailansichten eines Leiters einer Wicklung der in Fig. 1 und 2 gezeigten elektrischen Maschine,
- Fig. 5: ein Wickelschema für eine Wicklung eines weiteren Ausführungsbeispiels einer erfindungsgemäßen elektrischen Maschine, und
- Fig. 6: ein Ausführungsbeispiel eines erfindungsgemäßen Kraftfahrzeugs.

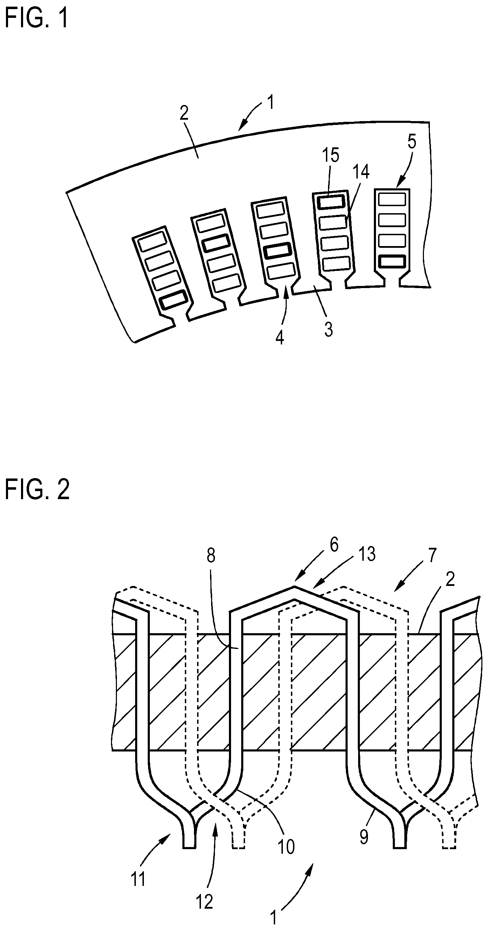

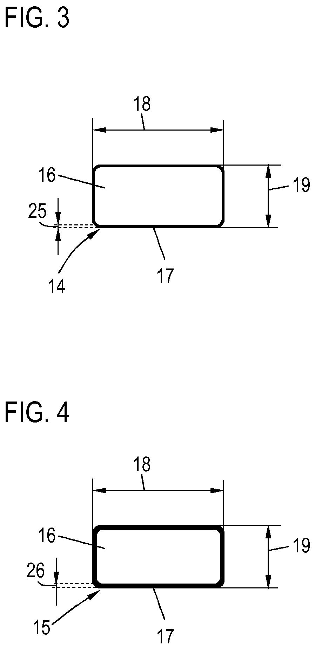

Fig. 1 zeigt eine geschnittene Detailansicht eines Stators 1 einer elektrischen Maschine. Der Stator 1 umfasst einen Wicklungsträger 2 mit von dem Wicklungsträger abragenden Zähnen 3 und dazwischen liegenden Nuten 5. Die Nuten 5 nehmen Wicklungen 4 der elektrischen Maschine auf, die durch einen jeweiligen Leiter gebildet sind. In Fig. 1 sind verschiedene Nutabschnitte 14, 15 des Leiters dargestellt. Wie schematisch durch die unterschiedlichen Randstärken der Nutabschnitte 14, 15 dargestellt ist, weisen die Isolationsschichten dieser Nutabschnitte 14, 15, wie später mit Bezug auf Fig. 3 und 4 genauer erläutert werden wird, voneinander unterschiedliche Schichtdicken auf.

Die Wicklungen 4 sind, wie in Fig. 2 schematisch dargestellt ist, durch mehrere Leiterklammern 6, 7 gebildet, die jeweils zwei Nutabschnitte 8 und einen die Nutabschnitte 8 verbindenden Kopplungsabschnitt 13 aufweisen. In Fig. 2 bilden die durchgezogen dargestellten Leiterklammern 6 die Wicklungen einer ersten Phase und die gestrichelt dargestellten Leiterklammern 7 die Wicklungen einer zweiten Phase. Aus Übersichtlichkeitsgründen sind in Fig. 2 nur zwei Phasen und nur eine jeweilige Wicklungsschicht dargestellt. Typischerweise werden in Statoren von elektrischen Maschinen Wicklungen für drei Phasen genutzt und es ist auch möglich, mehrere parallele Wicklungen für einzelne Phasen vorzusehen.

Im Rahmen der Herstellung des Stators 1 werden die Leiterklammern 6, 7 der verschiedenen Phasen zunächst ringförmig angeordnet und dann axial, also in Hochrichtung der Fig. 2, in den Wicklungsträger 2 eingeführt. Hierbei sind die freien Enden 9, 10 der Leiterklammern 6, 7 zunächst gerade, so dass eine einfache axiale Einführung in den Wicklungsträger möglich ist. Die einzelnen Leiterklammern 6, 7 stehen hierbei gegenüber dem Radius des Wicklungsträgers 2 leicht schräg, so dass beispielsweise das freie Ende 10 der Leiterklammer 6 in einer tieferen Wicklungsebene, also in Fig. 2 weiter vom Betrachter entfernt, liegt, als das freie Ende 9.

Um die einzelnen Leiterklammern 6, 7 zu den Wicklungen 4 zu verbinden, werden die freien Enden 9, 10 verdreht bzw. gebogen. Dies wird auch als Twisten bezeichnet. Hierbei werden alle freien Enden, die auf einem bestimmten Radius liegen, in die gleiche Richtung gebogen. Somit werden beispielsweise die in einer tieferen Wicklungsebene liegenden Enden 10 in Fig. 2 nach links und die in einer höheren Wicklungsebene liegenden Enden 9 nach rechts gebogen. Somit überlappen sie mit einem weiteren freien Ende einer benachbarten Leiterklammer einer benachbarten Wicklungsebene im Verbindungsbereich 11 und können leitend miteinander verbunden, insbesondere verschweißt, werden.

Das beschriebene Vorgehen entspricht dem bekannten Vorgehen beim Herstellen von Statoren in einer Hairpin-Bauweise. Daher wurde es vorangehend nur kurz an einem stark vereinfachten Beispiel erläutert. Wesentlich ist, dass die Leiter der verschiedenen Windungen 4 sich bei einem Aufbau des Stators 1 in Hairpin-Bauweise an einer Vielzahl von Kreuzungspunkten 12 kreuzen. An diesen Kreuzungspunkten werden, insbesondere im Bereich von Wicklungsanschlüssen der einzelnen Wicklungen, Leiter mit großen Spannungsunterschieden nah aneinander vorbeigeführt. Es ist daher insbesondere im Bereich der Wicklungsanschlüsse erforderlich, relativ dicke Isolationsschichten an den Leitern vorzusehen. Weiter beabstandet von den Wicklungsanschlüssen fallen typischerweise erheblich geringere Spannungen zwischen sich an den Kreuzungspunkten 12 kreuzenden Leitern verschiedener Phasen ab, so dass dort Isolationsschichten mit geringeren Schichtdicken genutzt werden können. Um somit einen optimalen Kupferfüllfaktor zu erreichen ist es vorteilhaft, wie in Fig. 1 schematisch dargestellt ist, Isolationsschichten mit verschiedenen Schichtdicken für unterschiedliche Nutabschnitte 8, 14, 15 vorzusehen. Dies wird im Folgenden genauer mit Bezug auf Fig. 3 und 4 erläutert.

Fig. 3 zeigt eine Detailansicht des Nutabschnitts 14 und Fig. 4 eine Detailansicht des Nutabschnitts 15. Beide Nutabschnitte 14, 15 sind dadurch gebildet, dass auf den Leiter 16 eine Isolationsschicht 17 aufgebracht ist. Die Isolationsschicht 17 kann insbesondere im Rahmen eines Kunststoff-Extrusionsprozesses aufgebracht sein, das ein solcher Prozess es ermöglicht, die Schichtdicke 25, 26 der jeweiligen Isolationsschicht 17 im Wesentlichen frei zu wählen.

Wie durch einen Vergleich der Fig. 3 und 4 leicht zu erkennen ist, ist die Schichtdicke 25 der Isolationsschicht 17 für den Nutabschnitt 14 erheblich geringer als die Schichtdicke 25 der Isolationsschicht 17 für den Nutabschnitt 15. Der Nutabschnitt 15 kann somit insbesondere in Bereichen genutzt werden, in denen Kreuzungen mit Leitern anderer Phasen mit großem erwarteten Spannungsunterschied vorhanden sind. Werden keine großen Spannungsunterschiede an Kreuzungspunkten 12 erwartet, können Nutabschnitte 14 mit geringerer Schichtdicke 25 der Isolationsschicht 17 genutzt werden.

Trotz der unterschiedlichen Schichtdicken 25, 26 der Isolationsschichten 17 ist die Summe der Querschnittsflächen des Leiters 16 und der Isolationsschicht 17 für beide Nutabschnitte 14, 15 gleich, da die Gesamtbreite 18 und die Gesamthöhe 19 des Leiters 16 mit der darauf aufgebrachten Isolationsschicht 17 in beiden Fällen gleich ist. Aufgrund der gleichen Abmessungen 18, 19 der Leiterabschnitte 14, 15 und somit insbesondere der die entsprechenden Leiterabschnitte 14, 15 ausbildenden Leiterklammern 6, 7 können die Nutabschnitte 14, 15 bzw. die Leiterklammern 6, 7 im Rahmen einer automatisierten Herstellung des Stators 1 einfach gehandhabt werden, da die gleichen Vorrichtungen auf gleiche Weise genutzt werden können, um Nutabschnitte 14, 15 bzw. Leiterklammern 6, 7 mit unterschiedlichen Schichtdicken 25, 26 der Isolationsschicht 17 zu handhaben.

Eine einfache Möglichkeit unterschiedlicher Schichtdicken 25, 26 der Isolationsschicht 17 für unterschiedliche Nutabschnitte 14, 15 zu erreichen ist es, Leiterklammern 6, 7 zu nutzen, deren Nutabschnitte 8 beide die gleiche Schichtdicke 25, 26 der Isolationsschicht 17 aufweisen, wobei für unterschiedliche Leiterklammern 6, 7 unterschiedliche Schichtdicken 25, 26 der Isolationsschicht 17 genutzt werden können. Die Isolationsschicht 17 kann sich im Wesentlichen über die gesamte Länge der Leiterklammern 6, 7 erstrecken. Im Bereich der Verbindungen 11 kann diese entweder im Rahmen der Verbindung entfernt werden oder die Leiterklammern 6, 7 können bereits mit isolationsfreien Enden bereitgestellt werden. Hierdurch wird insbesondere erreicht, dass auch im Bereich der Kreuzungspunkte 12 eine entsprechende Schichtdicke 25, 26 der Isolationsschicht 17 vorhanden ist.

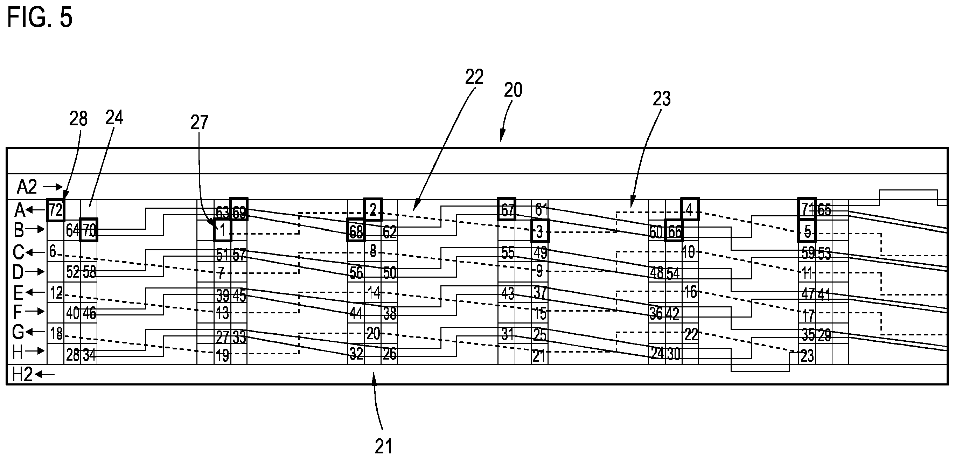

Die Vorteile der Nutzung von Isolationsschichten mit unterschiedlichen Schichtdicken für unterschiedliche Abschnitte der Wicklung einer elektrischen Maschine werden im Folgenden mit Bezug auf Fig. 5 an einem konkreten beispielshaften Wickelschema erläutert. Das Wickelschema 20 zeigt den Aufbau einer Windung in einem Stator mit insgesamt 52 Nuten 21. Die Kästchen 24 markieren hierbei jeweils eine Wicklungslage in jeweils einer Nut 21 für eine Phase. Die Nuten und Wicklungslagen für die verbleibenden zwei Phasen sind in Fig. 5 aus Übersichtlichkeitsgründen nicht dargestellt. Die mit den Ziffern 1 bis 72 markierten Kästchen bezeichnen hierbei die Nutabschnitte einer Wicklung, wobei die Abzählung der Nutabschnitte entlang dem Leiter erfolgt. Die Wicklung wird somit an den Wicklungsanschlüssen 27, 28 kontaktiert. Die verbleibenden leeren Kästchen 24 nehmen eine zweite Wicklung der gleichen Phase auf, die aus Übersichtlichkeitsgründen nicht dargestellt ist. Die Buchstaben A bis H bezeichnen die einzelnen Wicklungslagen der Nuten 21. Die daneben dargestellten Pfeile geben an, in welche Richtung freie Enden von Nutabschnitten dieser Wicklungslage beim Twisten gekrümmt werden, um sie mit weiteren freien Enden zu verbinden.

Die gezeigten Wicklung verläuft vom Kästchen 1, das beispielsweise nahe am Boden einer Nut angeordnet sein kann, zunächst, wie durch die gestrichelte Linie dargestellt ist, zu relativ weit oben in den Nuten liegenden Nutdurchführungen, nämlich dem Kästchen 23. Von dort wird die Wicklung, wie durch die durchgezogenen Linien dargestellt ist, zurück zu dem Bereich der Nutböden, nämlich zu dem Kästchen 72 geführt. Die Form der Verbindungslinien 22, 23 zeigt hierbei, wie die jeweiligen Nutabschnitte verbunden sind. Die schräg verlaufenden Linien 22 zeigt eine Verbindung über einen Kopplungsabschnitt 13 einer jeweiligen Leiterklammer 6, 7. Die gestuften Linien 23 zeigt eine Verbindung über gebogene Enden 9, 10 verschiedener Leiterklammern 6, 7 über einen Verbindungsbereich 11, beispielsweise über eine Verschweißung. Hierbei ist erkennbar, dass die Kästchen 1 und 72, also die Nutabschnitte, die die Wicklungsanschlüsse 27, 28 bereitstellen, nicht über einen Kopplungsabschnitt 13 mit weiteren Nutabschnitten verbunden sind. Die entsprechenden Nutabschnitte können separat als Stifte eingebracht werden. Besonders vorteilhaft ist es jedoch, für die zu den Kästchen 1, 72 zugehörigen Nutabschnitte zunächst eine gemeinsame Leiterklammer zu nutzen und deren Kopplungsabschnitt 13 nach dem Einbringen in den Wicklungsträger 2 zu trennen.

Wie bereits vorangehend erläutert, sind an Kreuzungspunkten 12, an denen sich Leiter verschiedener Phasen kreuzen, insbesondere dann hohe Spannungen zwischen den sich kreuzenden Leitern zu erwarten, wenn diese Kreuzungspunkte 12 für zumindest einen dieser Leiter entlang des entsprechenden Leiters relativ nahe an den Wicklungsanschlüssen 27, 28 liegen. Der Leiter sollte für eine gewisse Länge ausgehend von diesen Wicklungsanschlüssen 27, 28 somit eine stärkere Isolation aufweisen, wie es in Fig. 5 durch die dickeren Ränder der Kästchen 1 bis 5 und 66 bis 72 dargestellt ist. Dies kann relativ einfach umgesetzt werden, indem, wie vorangehend erläutert, Leiterklammern 6, 7 mit unterschiedlich dicken Isolationsschichten genutzt werden, die jedoch vorzugsweise die gleichen Außenabmessungen aufweisen. Solche Leiterklammern mit dickerer Isolationsschicht können für die Kästchenpaare 2 und 3, 4 und 5, 70 und 71, 68 und 69 und 66 und 67 verwendet werden. Zudem kann eine solche Leiterklammer für das Kästchenpaar 1 und 72 verwendet werden und der Kopplungsabschnitt 13 dieser Leiterklammer 6, 7 kann anschließend getrennt werden, wie vorangehend erläutert wurde. Für die verbleibenden Nutabschnitte bzw. die Kästchen 6 bis 65 können hingegen Leiterklammern 6, 7 mit einer dünneren Isolationsschicht 17 genutzt werden, um insgesamt einen hohen Kupferfüllfaktor der Nuten 5 zu erreichen.

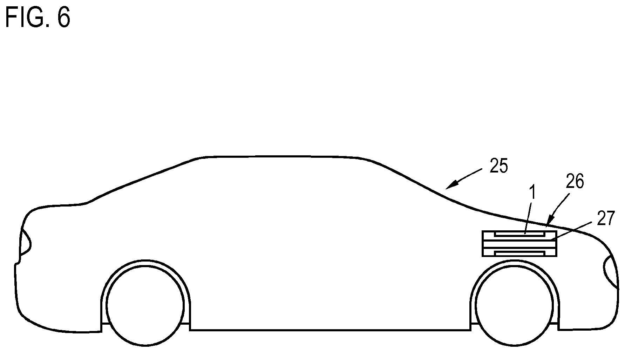

Aufgrund der erreichbaren hohen Füllfaktoren für Nuten und aufgrund der potentiell nutzbaren höheren Spannungen ist das beschriebene Vorgehen insbesondere bei einer Nutzung von elektrischen Maschinen 26 in Kraftfahrzeugen 25 relevant, wie dies in Fig. 6 dargestellt ist. Die elektrische Maschine 26 weist hierbei einen Rotor 27 und den bereits vorangehend diskutierten Stator 1 auf. Die elektrische Maschine 26 kann beispielsweise zum Antrieb des Kraftfahrzeugs 25 dienen. Das beschriebene Vorgehen ermöglicht es hohe Leistungsdichten bei einer kompakten Bauweise der elektrischen Maschine 26 zu erreichen.

## Patentansprüche

1. Elektrische Maschine mit einem Wicklungsträger (2) mit mehreren Nuten (5, 21), der wenigstens eine Wicklung (4) trägt, wobei die Wicklung (4) durch einen Leiter (16) gebildet ist, der mehrere Nutabschnitte (8, 14, 15) aufweist, die sich jeweils innerhalb einer der Nuten (5, 21) des Wicklungsträgers (2) erstrecken und die durch Verbindungsabschnitte des Leiters (16), die außerhalb der Nuten (5, 21) liegen, leitend verbunden sind, wobei die Wicklung (4) mehrere miteinander leitend verbundene Leiterklammern (6, 7) umfasst, die jeweils zwei Nutabschnitte (8, 14, 15) und einen die Nutabschnitte (8, 14, 15) verbindenden Kopplungsabschnitt (13) ausbilden, wobei die einzelnen Leiterklammern (6, 7) gegenüber dem Radius des Wicklungsträgers (2) derart schräg stehen, dass ein erstes freies Ende (10) der jeweiligen Leiterklammer (6) in einer tieferen Wicklungsebene liegt, als ein zweites freies Ende (9) der Leiterklammer (6),
**dadurch gekennzeichnet,**
**dass** der Leiter (16) zumindest in den Nutabschnitten (8, 14, 15) eine auf dem Leiter (16) aufgebrachte Isolationsschicht (17) aufweist, wobei die Isolationsschicht (17) für wenigstens zwei der Nutabschnitte (8, 14, 15) eine voneinander unterschiedliche Schichtdicke (25, 26) aufweist, wobei beide Nutabschnitte (14) einer ersten der Leiterklammern (6, 7) eine Isolationsschicht (17) mit einer ersten Schichtdicke (25) aufweisen und wobei beide Nutabschnitte (15) einer zweiten der Leiterklammern (6, 7) eine Isolationsschicht (17) mit einer von der ersten Schichtdicke (25) unterschiedlichen zweiten Schichtdicke (26) aufweisen.

2. Elektrische Maschine nach Anspruch 1,
**dadurch gekennzeichnet,**
**dass** die Summe der Querschnittsflächen des Leiters (16) und der Isolationsschicht (17) in einem ersten der Nutabschnitte (8, 14, 15) gleich der Summe der Querschnittsflächen des Leiters (16) und der Isolationsschicht (17) in einem zweiten der Nutabschnitte (8, 14, 15), in dem die Isolationsschicht (17) eine andere Schichtdicke (25, 26) als in dem ersten Nutabschnitt (8, 14, 15) aufweist, ist.

3. Elektrische Maschine nach Anspruch 1 oder 2,
**dadurch gekennzeichnet,**
**dass** die erste und die zweite Leiterklammer (6, 7) die gleichen Außenabmessungen (18, 19) aufweisen.

4. Elektrische Maschine nach einem der vorangehenden Ansprüche,
**dadurch gekennzeichnet,**
**dass** die Nutabschnitte (8, 14, 15) jeweils entweder eine erste Schichtdicke (25) oder eine zweite Schichtdicke (26) aufweisen.

5. Elektrische Maschine nach einem der vorangehenden Ansprüche,
**dadurch gekennzeichnet,**
**dass** der Leiter (16) der Wicklung (4) sich von einem ersten zu einem zweiten Wicklungsanschluss (27, 28) erstreckt, wobei bei einer Abzählung der Nutabschnitte (8, 14, 15) entlang dem Leiter (16) ausgehend vom ersten und/oder vom zweiten Wicklungsanschluss (27, 28) die Isolationsschicht (17) zumindest des ersten und/oder des zweiten und/oder des dritten Nutabschnitts (14) eine Isolationsschicht (17) aufweist, die eine größere Schichtdicke (26) aufweist als die Isolationsschicht (17) wenigstens eines entlang dem Leiter weiter von dem ersten und/oder zweiten Wicklungsanschluss (27, 28) entfernten Nutabschnitts (15).

6. Elektrische Maschine nach einem der vorangehenden Ansprüche,
**dadurch gekennzeichnet,**
**dass** die Isolationsschicht (17) durch einen Kunststoffmantel des Leiters (16) gebildet ist.

7. Kraftfahrzeug,
**dadurch gekennzeichnet,**
**dass** es eine elektrische Maschine (26) nach einem der vorangehenden Ansprüche umfasst.

8. Verfahren zur Herstellung einer Wicklung (4) für eine elektrische Maschine (26), umfassend die Schritte:
- Bereitstellen eines Wicklungsträgers (2) mit mehreren Nuten (5, 21) und mehrerer Leiterklammern (6, 7), die jeweils aus einem klammerförmigen Leiterabschnitt gebildet sind und jeweils zwei Nutabschnitte (8, 14, 15) und einen die Nutabschnitte (8, 14, 15) verbindenden Kopplungsabschnitt (13) ausbilden, wobei die Leiterabschnitte zumindest abschnittsweise, nämlich zumindest in den Nutabschnitten (8, 14, 15), eine auf dem Leiterabschnitt aufgebrachte Isolationsschicht (17) aufweisen, wobei die Isolationsschichten (17) wenigstens zweier Leiterklammern (6, 7) eine voneinander unterschiedliche Schichtdicke (25, 26) aufweisen, sodass beide Nutabschnitte (14) einer ersten der Leiterklammern (6, 7) eine Isolationsschicht (17) mit einer ersten Schichtdicke (25) aufweisen und beide Nutabschnitte (15) einer zweiten der Leiterklammern (6, 7) eine Isolationsschicht (17) mit einer von der ersten Schichtdicke (25) unterschiedlichen zweiten Schichtdicke (26) aufweisen,
- Axiales Einschieben der Leiterklammern (6, 7) in den Wicklungsträger (2) derart, dass die einzelnen Leiterklammern (6, 7) gegenüber dem Radius des Wicklungsträgers (2) derart schräg stehen, dass ein erstes freies Ende (10) der jeweiligen Leiterklammer (6) in einer tieferen Wicklungsebene liegt, als ein zweites freies Ende (9) der Leiterklammer (6), und dass die Nutabschnitte (8, 14, 15) sich jeweils innerhalb einer der Nuten (5, 21) des Wicklungsträgers (2) erstrecken, und
- Verbinden von freien Enden (9, 10) einer jeweiligen Gruppe der Leiterklammern (6, 7) zur Verbindung der Leiterabschnitte dieser Leiterklammern (6, 7) zu einem Leiter (16) einer Wicklung (4), womit die Nutabschnitte (8, 14, 15) durch außerhalb der Nuten (5, 21) liegende Verbindungsabschnitte des Leiters (16) leitend verbunden sind.

## Claims

1. Electrical machine having a winding support (2) having multiple grooves (5, 21), which carries at least one winding (4), wherein the winding (4) is formed by a conductor (16) which has multiple groove sections (8, 14, 15) which each extend within one of the grooves (5, 21) of the winding support (2) and which are conductively connected by connecting sections of the conductor (16) which are outside the grooves (5, 21), wherein the winding (4) comprises multiple conductor clamps (6, 7) which are conductively connected to one another and which each form two groove sections (8, 14, 15) and a coupling section (13) connecting the groove sections (8, 14, 15), wherein the individual conductor clamps (6, 7) are inclined with respect to the radius of the winding support (2) in such a way that a first free end (10) of the respective conductor clamp (6) lies in a lower winding level than a second free end (9) of the conductor clamp (6), **characterized in that**
the conductor (16) has at least in the groove sections (8, 14, 15) an insulation layer (17) applied to the conductor (16), wherein the insulation layer (17) has layer thicknesses (25, 26) different from one another for at least two of the groove sections (8, 14, 15), wherein both groove sections (14) of a first of the conductor clamps (6, 7) have an insulation layer (17) having a first layer thickness (25) and wherein both groove sections (15) of a second of the conductor clamps (6, 7) have an insulation layer (17) having a second layer thickness (26) different from the first layer thickness (25).

2. Electrical machine according to claim 1,
**characterized in that**
the sum of the cross-sectional areas of the conductor (16) and the insulation layer (17) in a first of the groove sections (8, 14, 15) is equal to the sum of the cross-sectional areas of the conductor (16) and the insulation layer (17) in a second of the groove sections (8, 14, 15), in which the insulation layer (17) has a different layer thickness (25, 26) than in the first groove section (8, 14, 15).

3. Electrical machine according to claim 1 or 2,
**characterized in that**
the first and second conductor clamps (6, 7) have the same external dimensions (18, 19).

4. Electrical machine according to any of the preceding claims,
**characterized in that**
the groove sections (8, 14, 15) each have either a first layer thickness (25) or a second layer thickness (26).

5. Electrical machine according to any of the preceding claims,
**characterized in that**
the conductor (16) of the winding (4) extends from a first to a second winding terminal (27, 28), wherein when counting the groove sections (8, 14, 15) along the conductor (16) starting from the first and/or the second winding terminal (27, 28), the insulation layer (17) of at least the first and/or the second and/or the third groove section (14) has an insulation layer (17) which has a greater layer thickness (26) than the insulation layer (17) of at least one groove section (15) along the conductor farther away from the first and/or second winding terminal (27, 28).

6. Electrical machine according to any of the preceding claims,
**characterized in that**
the insulation layer (17) is formed by a plastic sheath of the conductor (16).

7. Motor vehicle,
**characterized in that**
it comprises an electrical machine (26) according to any one of the preceding claims.

8. Method for producing a winding (4) for an electrical machine (26), comprising the steps:
- providing a winding support (2) having multiple grooves (5, 21) and multiple conductor clamps (6, 7), which are each formed from a clamp-shaped conductor section and which each form two groove sections (8, 14, 15) and a coupling section (13) connecting the groove sections (8, 14, 15), wherein the conductor sections at least partially, namely at least in the groove sections (8, 14, 15), have an insulation layer (17) applied to the conductor section, wherein the insulation layers (17) of at least two conductor clamps (6, 7) have different layer thicknesses (25, 26), so that both groove sections (14) of a first of the conductor clamps (6, 7) have an insulation layer (17) with a first layer thickness (25) and both groove sections (15) of a second of the conductor clamps (6, 7) have an insulation layer (17) with a second layer thickness (26) different from the first layer thickness (25),
- axially inserting the conductor clamps (6, 7) into the winding support (2) in such a way that the individual conductor clamps (6, 7) are inclined with respect to the radius of the winding support (2) in such a way that a first free end (10) of the respective conductor clamp (6) lies in a lower winding level than a second free end (9) of the conductor clamp (6), and that the groove sections (8, 14, 15) each extend within one of the grooves (5, 21) of the winding support (2), and
- connecting free ends (9, 10) of a respective group of the conductor clamps (6, 7) to connect the conductor sections of these conductor clamps (6, 7) to a conductor (16) of a winding (4), whereby the groove sections (8, 14, 15) are conductively connected by connecting sections of the conductor (16) which are outside the grooves (5, 21).

## Revendications

1. Machine électrique avec un support d'enroulement (2) avec plusieurs rainures (5, 21), support d'enroulement qui porte au moins un enroulement (4), dans laquelle l'enroulement (4) est formé par un conducteur (16) qui présente plusieurs sections de rainure (8, 14, 15) qui s'étendent respectivement à l'intérieur d'une des rainures (5, 21) du support d'enroulement (2) et qui sont reliées de manière conductrice par des sections de connexion du conducteur (16) qui se situent à l'extérieur des rainures (5, 21), dans laquelle l'enroulement (4) comprend plusieurs pinces de conducteur (6, 7) reliées les unes aux autres de manière conductrice qui forment respectivement deux sections de rainure (8, 14, 15) et une section de couplage (13) connectant les sections de rainure (8, 14, 15), dans laquelle les pinces de conducteur (6, 7) individuelles sont inclinées par rapport au rayon du support d'enroulement (2) de sorte qu'une première extrémité libre (10) de la pince de conducteur (6) respective se situe dans un plan d'enroulement plus bas qu'une deuxième extrémité libre (9) de la pince de conducteur (6), **caractérisée en ce que**
le conducteur (16) présente, au moins dans les sections de rainure (8, 14, 15), une couche d'isolation (17) appliquée sur le conducteur (16), dans laquelle la couche d'isolation (17) présente une épaisseur de couche (25, 26) différente l'une de l'autre pour au moins deux des sections de rainure (8, 14, 15), dans laquelle les deux sections de rainure (14) d'une première des pinces de conducteur (6, 7) présentent une couche d'isolation (17) avec une première épaisseur de couche (25) et dans laquelle les deux sections de rainure (15) d'une deuxième des pinces de conducteur (6, 7) présentent une couche d'isolation (17) avec une deuxième épaisseur de couche (26) différente de la première épaisseur de couche (25).

2. Machine électrique selon la revendication 1,
**caractérisée en ce que**
la somme des surfaces de section transversale du conducteur (16) et de la couche d'isolation (17) dans une première des sections de rainure (8, 14, 15) est égale à la somme des surfaces de section transversale du conducteur (16) et de la couche d'isolation (17) dans une deuxième des sections de rainure (8, 14, 15), dans laquelle la couche d'isolation (17) présente une épaisseur de couche (25, 26) différente de celle de la première section de rainure (8, 14, 15).

3. Machine électrique selon la revendication 1 ou 2,
**caractérisée en ce que**
la première et la deuxième pinces de conducteur (6, 7) présentent les mêmes dimensions extérieures (18, 19).

4. Machine électrique selon l'une quelconque des revendications précédentes,
**caractérisée en ce que**
les sections de rainure (8, 14, 15) présentent respectivement soit une première épaisseur de couche (25), soit une deuxième épaisseur de couche (26).

5. Machine électrique selon l'une quelconque des revendications précédentes,
**caractérisée en ce que**
le conducteur (16) de l'enroulement (4) s'étend d'un premier à une deuxième borne d'enroulement (27, 28), dans laquelle, lors d'un comptage des sections de rainure (8, 14, 15) le long du conducteur (16) en partant de la première et/ou de la deuxième borne d'enroulement (27, 28), la couche d'isolation (17) d'au moins la première et/ou la deuxième et/ou la troisième section de rainure (14) présente une couche d'isolation (17) qui présente une épaisseur de couche (26) plus grande que la couche d'isolation (17) d'au moins une section de rainure (15) le long du conducteur plus éloignée de la première et/ou de la deuxième borne d'enroulement (27, 28).

6. Machine électrique selon l'une quelconque des revendications précédentes,
**caractérisée en ce que**
la couche d'isolation (17) est formée par une enveloppe plastique du conducteur (16).

7. Véhicule automobile,
**caractérisé en ce que**
il comprend une machine électrique (26) selon l'une quelconque des revendications précédentes.

8. Procédé de fabrication d'un enroulement (4) pour une machine électrique (26), comprenant les étapes de :
- préparation d'un support d'enroulement (2) avec plusieurs rainures (5, 21) et plusieurs pinces de conducteur (6, 7) qui sont respectivement formées d'une section de conducteur en forme de pince et forment respectivement deux sections de rainure (8, 14, 15) et une section de couplage (13) connectant les sections de rainure (8, 14, 15), dans lequel les sections de conducteur présentent au moins par sections, à savoir au moins dans les sections de rainure (8, 14, 15), une couche d'isolation (17) appliquée sur la section de conducteur, dans lequel les couches d'isolation (17) d'au moins deux pinces de conducteur (6, 7) présentent une épaisseur de couche (25, 26) différente l'une de l'autre, de sorte que les deux sections de rainure (14) d'une première des pinces de conducteur (6, 7) présentent une couche d'isolation (17) avec une première épaisseur de couche (25) et les deux sections de rainure (15) d'une deuxième des pinces de conducteur (6, 7) présentent une couche d'isolation (17) avec une deuxième épaisseur de couche (26) différente de la première épaisseur de couche (25),
- introduction axiale des pinces de conducteur (6, 7) dans le support d'enroulement (2) de sorte que les pinces de conducteur (6, 7) individuelles sont inclinées par rapport au rayon du support d'enroulement (2), en ce qu'une première extrémité libre (10) de la pince de conducteur (6) respective se situe dans un plan d'enroulement plus bas qu'une deuxième extrémité libre (9) de la pince de conducteur (6), et en ce que les sections de rainure (8, 14, 15) s'étendent respectivement à l'intérieur d'une des rainures (5, 21) du support d'enroulement (2), et
- connexion des extrémités libres (9, 10) d'un groupe respectif des pinces de conducteur (6, 7) pour connecter des sections de conducteur de ces pinces de conducteur (6, 7) à un conducteur (16) d'un enroulement (4), moyennant quoi les sections de rainure (8, 14, 15) sont connectées de manière conductrice par des sections de connexion du conducteur (16) situées à l'extérieur des rainures (5, 21).
